(19) Europäisches Patentamt
European Patent Office
Office européen des brevets

(11) **EP 4 365 848 A1**

(12) **EUROPEAN PATENT APPLICATION**
published in accordance with Art. 153(4) EPC

(43) Date of publication:
**08.05.2024 Bulletin 2024/19**

(21) Application number: **22832428.1**

(22) Date of filing: **22.02.2022**

(51) International Patent Classification (IPC):
**G06T 15/04** (2011.01)    **G06T 15/20** (2011.01)
**G06T 19/00** (2011.01)

(52) Cooperative Patent Classification (CPC):
**G06T 15/04; G06T 15/20; G06T 19/00**

(86) International application number:
**PCT/JP2022/007086**

(87) International publication number:
**WO 2023/276261 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.07.2021 JP 2021110478**

(71) Applicant: **Sony Group Corporation
Tokyo 108-0075 (JP)**

(72) Inventor: **KOBAYASHI, Goh
Tokyo 108-0075 (JP)**

(74) Representative: **D Young & Co LLP
3 Noble Street
London EC2V 7BQ (GB)**

(54) **INFORMATION PROCESSING DEVICE, INFORMATION PROCESSING METHOD, AND PROGRAM**

(57)    The present technology relates to an information processing device, an information processing method, and a program capable of providing a high image quality rendered image.

An image of a 3D model when the 3D model is viewed from a viewing viewpoint set and changed by a user is generated by rendering, the 3D model is mapped using a texture corresponding to each of a plurality of specific directions with respect to the 3D model at a time of the rendering, and a guide image for guiding a direction of the viewing viewpoint to match any of the plurality of specific directions is generated.

*FIG. 10*

EP 4 365 848 A1

# Description

## TECHNICAL FIELD

The present technology relates to an information processing device, an information processing method, and a program, and more particularly, to an information processing device, an information processing method, and a program capable of providing a high image quality rendered image.

## BACKGROUND ART

Patent Document 1 discloses a Volumetric technique of imaging an object such as a real person, converting the object into 3D data, and generating a rendered image of the object according to the viewpoint of the user.

## CITATION LIST

## PATENT DOCUMENT

Patent Document 1: WO 2018/150933

## SUMMARY OF THE INVENTION

## PROBLEMS TO BE SOLVED BY THE INVENTION

When generating a rendered image of an object according to the viewpoint of the user by using 3D data of the object, the image quality of the texture to be pasted on the object affects the image quality of the rendered image.

The present technology has been made in view of such a situation, and makes it possible to provide a high image quality rendered image.

## SOLUTIONS TO PROBLEMS

An information processing device or a program according to the present technology is an information processing device including a display unit that generates, by rendering, an image of a 3D model when the 3D model is viewed from a viewing viewpoint set and changed by a user and maps the 3D model using a texture corresponding to each of a plurality of specific directions with respect to the 3D model at a time of the rendering, the display unit being configured to generate a guide image for guiding a direction of the viewing viewpoint to match any of the plurality of specific directions, or a program for causing a computer to function as such an information processing device.

An information processing method of the present technology is an information processing method performed by a display unit, the display unit being included in the information processing device, the method including generating, by rendering, an image of a 3D model when the 3D model is viewed from a viewing viewpoint set and changed by a user and mapping the 3D model using a texture corresponding to each of a plurality of specific directions with respect to the 3D model at a time of the rendering, and generating a guide image for guiding a direction of the viewing viewpoint to match any of the plurality of specific directions.

In the information processing device, the information processing method, and a program of the present technology, an image of a 3D model when the 3D model is viewed from a viewing viewpoint set and changed by a user is generated by rendering, the 3D model is mapped using a texture corresponding to each of a plurality of specific directions with respect to the 3D model at a time of the rendering, and a guide image for guiding a direction of the viewing viewpoint to match any of the plurality of specific directions is generated.

## BRIEF DESCRIPTION OF DRAWINGS

Fig. 1 is a block diagram illustrating an outline of an information processing system to which the present technology is applied.
Fig. 2 is a diagram illustrating a state when image data for generating a 3D model of a subject is acquired.
Fig. 3 is a flowchart illustrating an example of a processing flow of the information processing system.
Fig. 4 is a diagram for explaining Mesh+UV Texture.
Fig. 5 is a diagram for explaining Mesh+Multi Texture.
Fig. 6 is a flowchart illustrating a general operation procedure in a case where a virtual image is combined with an image of a real space and displayed.
Fig. 7 is a diagram illustrating an arrangement of imaging cameras that acquire an image of texture in a case where the portable terminal 71 does not have a problem with the amount of data and in a case where the portable terminal has a problem with the amount of data.
Fig. 8 is a diagram illustrating a case where an imaging camera and a virtual camera are close to each other and a case where the imaging camera and the virtual camera are separated from each other.
Fig. 9 is a flowchart illustrating an operation procedure in a case where an image of a virtual object is combined with an image of a real space and displayed in the first embodiment.
Fig. 10 is a diagram illustrating a viewing guide A.
Fig. 11 is a diagram illustrating a viewing guide A.
Fig. 12 is a diagram illustrating a viewing guide B.
Fig. 13 is a block diagram illustrating a configuration example of a display unit in Fig. 1.
Fig. 14 is a diagram illustrating a process of detecting an imaging viewpoint closest to a virtual viewpoint.

Fig. 15 is a flowchart illustrating a processing procedure of detecting an imaging viewpoint closest to a virtual viewpoint in a case where there is a plurality of virtual objects.

Fig. 16 is a block diagram illustrating a configuration example of a virtual/imaging viewpoint silhouette generation unit.

Fig. 17 is a block diagram illustrating a configuration example of a viewing guide control unit.

Fig. 18 is a flowchart illustrating a display pattern 1 of a viewing guide.

Fig. 19 is a flowchart illustrating a display pattern 2 of the viewing guide.

Fig. 20 is a block diagram illustrating a configuration example of hardware of a computer in a case where the computer executes a series of processes in accordance with a program.

MODE FOR CARRYING OUT THE INVENTION

Hereinafter, embodiments of the present technology will be described with reference to the drawings.

<Embodiment of information processing system>

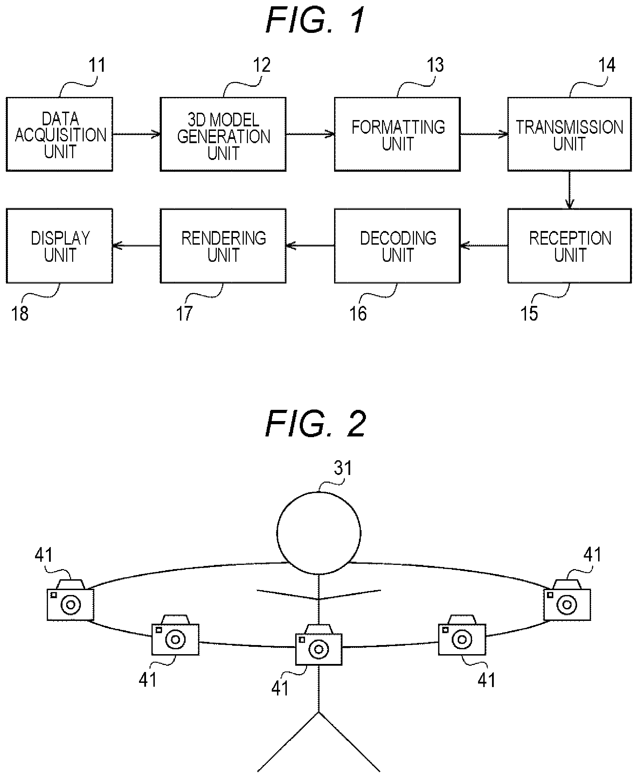

Fig. 1 illustrates an outline of an information processing system to which the present technology is applied. A data acquisition unit 11 acquires image data for generating a 3D model of the subject. For example, a) a plurality of viewpoint images captured by a plurality of imaging devices 41 (referred to as imaging cameras 41) disposed so as to surround a subject 31 as illustrated in Fig. 2 is acquired as image data. In this case, the plurality of viewpoint images is preferably images captured by the plurality of imaging cameras 41 in synchronization. Furthermore, the data acquisition unit 11 may acquire, for example, b) a plurality of viewpoint images obtained by imaging the subject 31 from a plurality of viewpoints by one imaging camera 41 as image data. Furthermore, the data acquisition unit 11 may acquire, for example, c) one captured image of the subject 31 as image data. In this case, a 3D model generation unit 12 as described later generates a 3D model using, for example, machine learning.

Note that the data acquisition unit 11 may perform calibration on the basis of the image data and acquire the internal parameters and the external parameters of each imaging camera 41. Furthermore, the data acquisition unit 11 may acquire, for example, a plurality of pieces of depth information indicating distances from viewpoints at a plurality of positions to the subject 31.

The 3D model generation unit 12 generates a model having three-dimensional information about the subject on the basis of image data for generating a 3D model of the subject 31. The 3D model generation unit 12 generates the 3D model of the subject by, for example, scraping the three-dimensional shape of the subject using images from a plurality of viewpoints (for example, silhouette images from the plurality of viewpoints) using what is referred to as a visual hull (volume intersection method). In this case, the 3D model generation unit 12 can further deform the 3D model generated using the visual hull with high accuracy using the plurality of pieces of the depth information indicating distances from viewpoints at a plurality of positions to the subject 31. Furthermore, for example, the 3D model generation unit 12 may generate the 3D model of the subject 31 from one captured image of the subject 31. The 3D model generated by the 3D model generation unit 12 can also be referred to as a moving image of the 3D model by generating the 3D model in time series frame units. Furthermore, since the 3D model is generated using an image captured by the imaging camera 41, it can also be referred to as a live-action 3D model. The 3D model can represent shape information representing a face shape of the subject in the form of, for example, mesh data represented by connection between the vertex and the vertex, which is referred to as a polygon mesh. The method of representing the 3D model is not limited thereto, and the 3D model may be described by what is referred to as a point cloud representation method that represents the 3D model by position information about points.

Data of color information is also generated as a texture in association with the 3D shape data. For example, there are a case of a view independent texture in which colors are constant when viewed from any direction and a case of a view dependent texture in which colors change depending on a viewing direction.

A formatting unit 13 converts the data of the 3D model generated by the 3D model generation unit 12 into a format suitable for transmission and accumulation. For example, the 3D model generated by the 3D model generation unit 12 may be converted into a plurality of two-dimensional images by performing perspective projection from a plurality of directions. In this case, depth information that is two-dimensional depth images from a plurality of viewpoints may be generated using the 3D model. The depth information about the state of the two-dimensional image and the color information are compressed to output to the transmission unit 14. The depth information and the color information may be transmitted side by side as one image or may be transmitted as two separate images. In this case, since they are in the form of two-dimensional image data, they can be compressed using a two-dimensional compression technique such as advanced video coding (AVC).

Furthermore, for example, the data of the 3D model may be converted into a point cloud format. It may be output to the transmission unit 14 as the three-dimensional data. In this case, for example, a three-dimensional compression technique of Geometry-based Approach discussed in MPEG can be used.

A transmission unit 14 transmits the transmission data formed by the formatting unit 13 to the reception unit 15. The transmission unit 14 performs a series of processes of the data acquisition unit 11, the 3D model generation unit 12, and the formatting unit 13 offline, and then transmits the transmission data to a reception unit 15. Furthermore, the transmission unit 14 may transmit the transmission data generated from the series of processes described above to the reception unit 15 in real time.

The reception unit 15 receives the transmission data transmitted from the transmission unit 14.

A decoding unit 16 performs a decoding process on the transmission data received by the reception unit 15, and decodes the received transmission data into 3D model data (shape and texture data) necessary for display.

A rendering unit 17 performs rendering using the data of the 3D model decoded by the decoding unit 16. For example, it projects a mesh of a 3D model from a viewpoint of a camera that draws the mesh of the 3D model, and performs texture mapping to paste a texture representing a color or a pattern. The drawing at this time can be arbitrarily set and viewed from a free viewpoint regardless of the camera position at the time of imaging.

For example, the rendering unit 17 performs texture mapping to paste a texture representing the color, pattern, or texture of the mesh according to the position of the mesh of the 3D model. The texture mapping includes what is referred to as a view dependent method in which the viewing viewpoint of the user is considered and a view independent method in which the viewing viewpoint of the user is not considered. Since the view dependent method changes the texture to be pasted on the 3D model according to the position of the viewing viewpoint, there is an advantage that rendering of higher quality can be achieved than by the view independent method. On the other hand, the view independent method does not consider the position of the viewing viewpoint, and thus there is an advantage that the processing amount is reduced as compared with the view dependent method. Note that the viewing viewpoint data is input from the display device to the rendering unit 17 after the display device detects a viewing point (region of interest) of the user. Furthermore, the rendering unit 17 may employ, for example, billboard rendering for rendering an object so that the object maintains a vertical posture with respect to the viewing viewpoint. For example, when rendering a plurality of objects, the rendering unit can render objects of low interest to the viewer by billboard and render other objects by another rendering method.

A display unit 18 displays a result of rendering by the rendering unit 17 on the display of a display device. The display device may be a 2D monitor or a 3D monitor, for example, a head mounted display, a spatial display, a cellular phone, a television, a PC, or the like.

An information processing system 1 in Fig. 1 illustrates a series of flow from the data acquisition unit 11 that acquires a captured image that is a material for generating content to the display unit 18 that controls the display device viewed by the user. However, it does not mean that all functional blocks are necessary for implementation of the present technology, and the present technology can be implemented for each functional block or a combination of a plurality of functional blocks. For example, in Fig. 1, the transmission unit 14 and the reception unit 15 are provided in order to illustrate a series of flow from an operation of creating content to an operation of viewing the content through distribution of content data, but in a case where the operations of content creation to viewing are performed by the same information processing device (for example, a personal computer), it is not necessary to include the formatting unit 13, the transmission unit 14, the reception unit 15, or the decoding unit 16.

When the present information processing system 1 is implemented, the same implementer may implement all of them, or different implementers may implement respective functional blocks. As an example, a business operator A generates 3D content through the data acquisition unit 11, the 3D model generation unit 12, and the formatting unit 13. Then, it is conceivable that the 3D content is distributed through the transmission unit 14 (platform) of a business operator B, and the display device of a business operator C performs reception, rendering, and display control of the 3D content.

Furthermore, each functional block can be implemented on a cloud. For example, the rendering unit 17 may be implemented in the display device or may be implemented in a server. In this case, information is exchanged between the display device and the server.

In Fig. 1, the data acquisition unit 11, the 3D model generation unit 12, the formatting unit 13, the transmission unit 14, the reception unit 15, the decoding unit 16, the rendering unit 17, and the display unit 18 are collectively described as the information processing system 1. However, the information processing system 1 of the present specification may be referred to as an information processing system when two or more functional blocks are involved, and for example, the data acquisition unit 11, the 3D model generation unit 12, the formatting unit 13, the transmission unit 14, the reception unit 15, the decoding unit 16, and the rendering unit 17 can be collectively referred to as the information processing system 1 without including the display unit 18.

<Flow of process of information processing system>

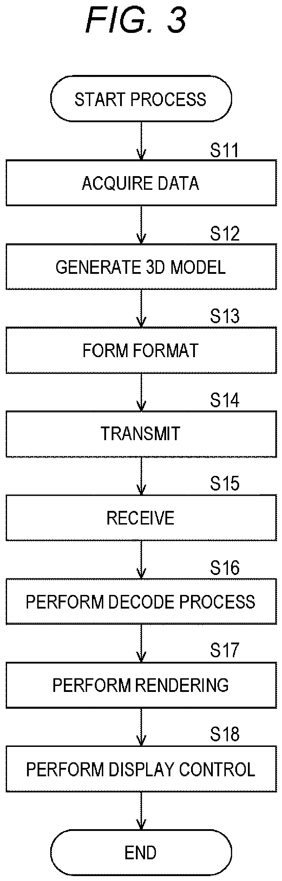

An example of a flow of a process of the information processing system 1 will be described with reference to a flowchart of Fig. 3.

When the process is started, in step S11, the data acquisition unit 11 acquires image data for generating the 3D model of the subject 31. In step S12, the 3D model generation unit 12 generates a model having three-dimensional information about the subject 31 on the basis of image data for generating a 3D model of the subject 31. In step S13, the formatting unit 13 encodes the shape and texture data of the 3D model generated by the 3D model generation unit 12 into a format suitable for transmission and accumulation. In step S14, the transmission unit 14 transmits the encoded data, and in step S15, the reception unit 15 receives the transmitted data. In step S16, the decoding unit 16 performs a decoding process to convert the data into shape and texture data necessary for display. In step S17, the rendering unit 17 performs rendering using the shape and texture data. In step S18, the display unit 18 displays the rendering result. When the process of step S18 ends, the process by the information processing system ends.

<First embodiment>

The first embodiment applied to the information processing system 1 of Fig. 1 will be described. Note that, in the following description, the display device displays a virtual object (virtual object) as content on, and the virtual object is a 3D model generated by imaging the subject 31 from a plurality of directions as illustrated in Fig. 2. The 3D model includes data representing the 3D shape (surface shape) and data of a texture representing the color of the surface or the like. In the following description, the term "3D model" mainly refers to the 3D shape of a virtual object, and the virtual object is generated by pasting a texture on the 3D model.

In the first embodiment, the rendering unit 17 uses the view dependent method out of the view independent method and the view dependent method as the rendering (texture mapping) method.

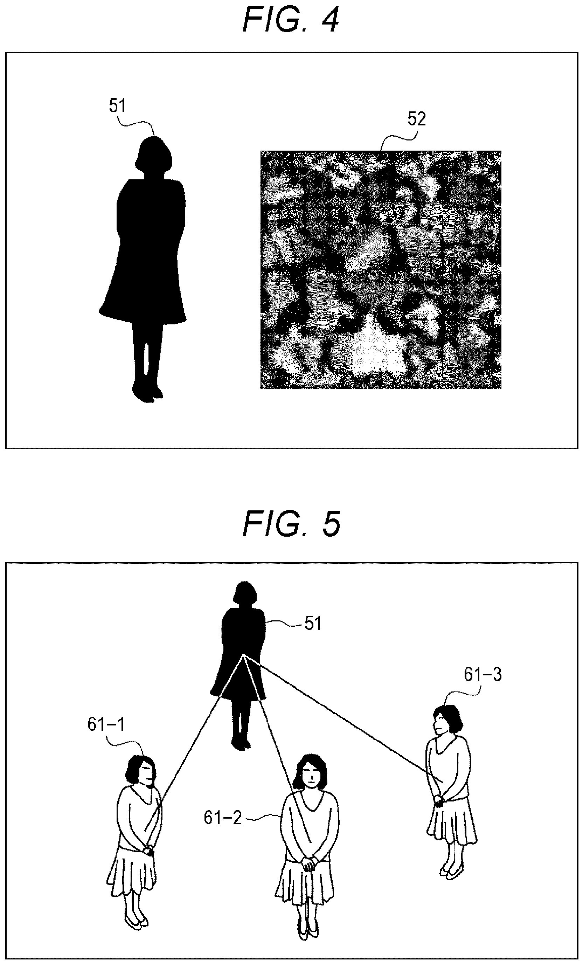

The view independent method is a format in which the texture to be pasted to the 3D model representing the surface shape of the virtual object is not changed according to the direction (also referred to as a viewing direction or a visually recognizing direction) of the viewing viewpoint of the user with respect to the virtual object at the time of rendering, and is a lightweight format having a small amount of data. As the view independent method, for example, Mesh+UV Texture generally used in computer graphics (CG) is well known. As illustrated in Fig. 4, the Mesh+UV Texture covers (texture mapping) all directions of a 3D model 51 (mesh) of a virtual object generated by modeling with one UV texture 52. The Mesh+UV Texture has a small amount of data, and thus has a low rendering load, and can be handled by general CG software, and thus is technically easy to handle. On the other hand, in the Mesh+UV Texture, since the image quality of the image of the virtual object after rendering is proportional to the accuracy of the 3D model, it is necessary to generate the 3D model with high accuracy in order to improve the image quality.

The view dependent method is a format in which the texture to be pasted to the 3D model is changed in consideration of the viewing direction of the user with respect to the virtual object at the time of rendering, and is a high-quality format in which high image quality rendering is performed. As the view dependent method, for example, a Mesh+Multi Texture is known. As illustrated in Fig. 5, the Mesh+Multi Texture has a plurality of textures 61-n (n is 1, 2, 3,..., N) attached to a 3D model 51 when the 3D model 51 is viewed (visually recognized) from a plurality of different viewing directions with respect to the 3D model 51 of the virtual object generated by modeling. That is, Mesh+Multi Texture has textures 61-n corresponding to a plurality of specific directions. The texture 61-n when the 3D model 51 is visually recognized from a predetermined viewing direction can be, for example, a captured image obtained by actually capturing the subject 31 in Fig. 2, which is the base of the 3D model 51, by the imaging camera 41 from the predetermined viewing direction. As the textures 61-n in a plurality of viewing directions (specific directions), captured images (or videos) of the subject 31 actually imaged by the imaging camera 41 from a plurality of different imaging directions are used. The Mesh+Multi Texture can perform the optimal texture mapping using the texture corresponding to the viewing direction of the user as described above, and thus, in particular, the rendered image (virtual image generated by rendering) when the virtual object is viewed from the viewing direction close to the imaging direction in which the texture is prepared has a natural appearance. The Mesh+Multi Texture has a larger amount of data than the Mesh+UV Texture, and thus has a higher load of rendering and requires a unique rendering engine, and thus is not easy to handle technically. On the other hand, since the Mesh+UV Texture can obtain a high image quality rendered image without requiring a highly accurate 3D model, the Mesh+UV Texture is often used and is also becoming easy to handle technically.

As described above, in the first embodiment, the view dependent method (Mesh+Multi Texture) is used as a rendering method.

<AR technology in display device>

In the first embodiment, for example, a portable terminal (mobile terminal) such as a smartphone or a tablet is used as the display device including the display unit 18 in Fig. 1. However, the display device is not limited to the portable terminal as described above. In a portable terminal, the above-described virtual object is virtually disposed in a real space (real space) using a technology of augmented reality (AR), and an image obtained by imaging the virtual object with a camera, that is, an image obtained by combining an image of the real space and an image of the virtual object (virtual image) is displayed. However, the image of the real space may not be displayed and only the virtual image may be displayed, and detailed description of the display of the image of the real space (combination of the image of the real space and the virtual image) will be omitted below.

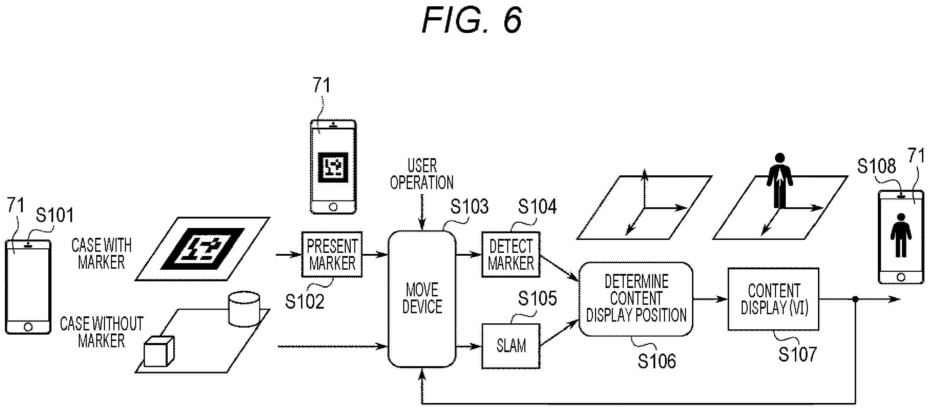

Fig. 6 is a flowchart illustrating a general operation procedure in a case where an image of the above-described virtual object is combined and displayed as content with an image of a real space by the AR technology in a display device (portable terminal). In other words, Fig. 6 illustrates an operation procedure in a case where a real space is imaged by the camera of the portable terminal 71 (device) which is a display device owned by the user, a real image in real time (an image of the real space) captured by the camera is displayed on the display device (display), and at the same time, an image of a virtual object (a virtual image) as content is superimposed and displayed on the real image.

In step S101, the user images the place of the real space where the content (virtual object) is disposed with the camera of the portable terminal 71. In the place where the virtual object is disposed, there are a case where a predetermined marker is disposed and a case where the marker is not disposed. In a case where the marker is not disposed, a place where the content is disposed is determined using an object (real object) existing practically as a mark.

Steps S102 to S104 represent a procedure in a case where a marker is disposed at a place where the content is disposed. In step S102, the portable terminal 71 presents a marker for displaying content to the user. In step S103, the user moves the portable terminal 71 to image a place where the marker as same the marker presented in step S102 is disposed. In step S104, the portable terminal 71 detects the marker presented in step S102 from the image captured by the camera.

In step S106, the portable terminal 71 determines the position at which the content is displayed in the image captured by the camera on the basis of the position, orientation, and the like of the marker in the image captured by the camera. Note that, in a case where an image of a three-dimensional virtual object is displayed as content, for example, on the basis of the position, shape, size, orientation, and the like of the marker in the image captured by the camera, a three-dimensional coordinate system with the marker as a reference is set with respect to the real space imaged by the camera, and the viewpoint position and the like of the camera in the three-dimensional coordinate system are obtained. The viewpoint position of the camera corresponds to the position of the viewing viewpoint of the user viewing the content (virtual object). On the basis of the position and orientation of the virtual object in the three-dimensional coordinate system, the viewpoint position of the camera, and the like, the position at which the image (content) of the virtual object is displayed in the image captured by the camera is determined.

In step S107, the portable terminal 71 performs control to generate a display image in which content (an image of a virtual object) is superimposed on the position determined in step S105, and display the display image on the display. In step S108, the display image generated in step S107 is displayed on the display of the portable terminal 71. The procedure from step S103 to step S108 is repeatedly performed.

Steps S103 and S105 represent a procedure performed in place of steps S102 to S104 in a case where the marker is not disposed at the place where the content is disposed. In step S103, the user moves the portable terminal 71 so that the place where the content is displayed is imaged by the camera of the portable terminal 71. In step S105, a feature point is detected from the image captured by the camera of the portable terminal 71 by the simultaneous localization and mapping (SLAM) (self-position estimation and creation of environmental map) technology, and the position of the real object imaged by the camera in the real space, the viewpoint position and direction of the camera, and the like are detected on the basis of the detected feature point. With this arrangement, in a case where the place where the content is displayed is imaged by the camera, the position where the image (content) of the virtual object is displayed in the image imaged by the camera is determined in step S106.

<Problem>

As illustrated in Fig. 6, in a case where an image (virtual image) of a virtual object is displayed as content on the portable terminal 71, in a case where the view dependent method is used as a method of rendering (texture mapping), it is possible to display a high image quality rendered image, but there are the following problems.

Since the texture to be pasted to the 3D model at the time of rendering (mapping) is required to be prepared for each of a plurality of different viewing directions, the amount of data of the virtual object is enormous. Specifically, in a case where the portable terminal 71 is a terminal in a thin client, the amount of data is limited depending on a use case (store capacity limitation), and thus, it is necessary to reduce the amount of data of the virtual object.

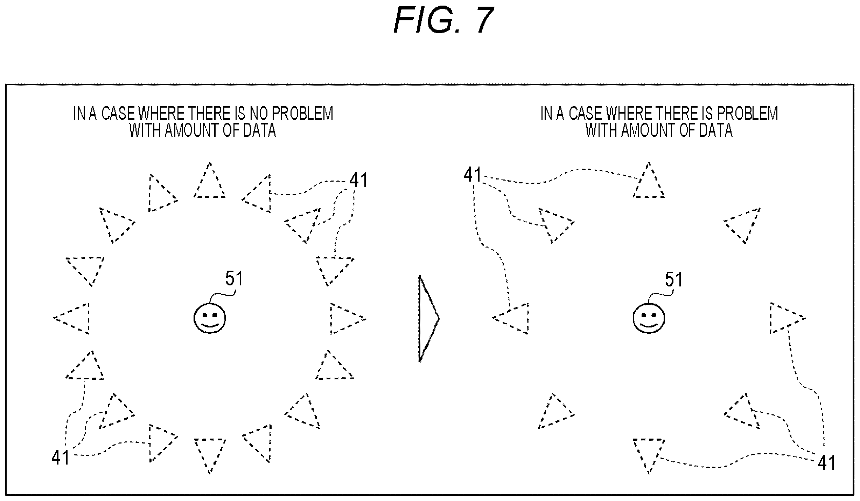

For example, in a case where the portable terminal 71 does not have a problem with the amount of data, as illustrated in the left diagram of Fig. 7, captured images obtained by capturing images of the subject 31 that are the basis of the 3D model 51 (virtual object) with many imaging cameras 41 (see Fig. 2) can be used as the texture of the virtual object. In a case where the portable terminal 71 is required to reduce the amount of data of the virtual object, it is necessary to reduce the number of captured images used as textures or the number of the imaging cameras 41 as illustrated in the right diagram of Fig. 7.

In a case where the number of textures is small as in the right diagram of Fig. 7, a deviation between the direction of the viewpoint (imaging viewpoint) of the texture and the direction of the viewpoint (virtual viewpoint) of rendering is a problem. The viewpoint of the texture (imaging viewpoint) represents the viewpoint of the imaging camera 41 that has acquired the captured image as the texture. The viewpoint of rendering (virtual viewpoint) represents a viewing viewpoint for viewing the virtual object (3D model 51) set at the time of rendering, that is, a viewpoint of a virtual camera that images the virtual object. Note that the position of the virtual viewpoint is set on the basis of the position of the viewpoint of the camera of the portable terminal 71 in the real space.

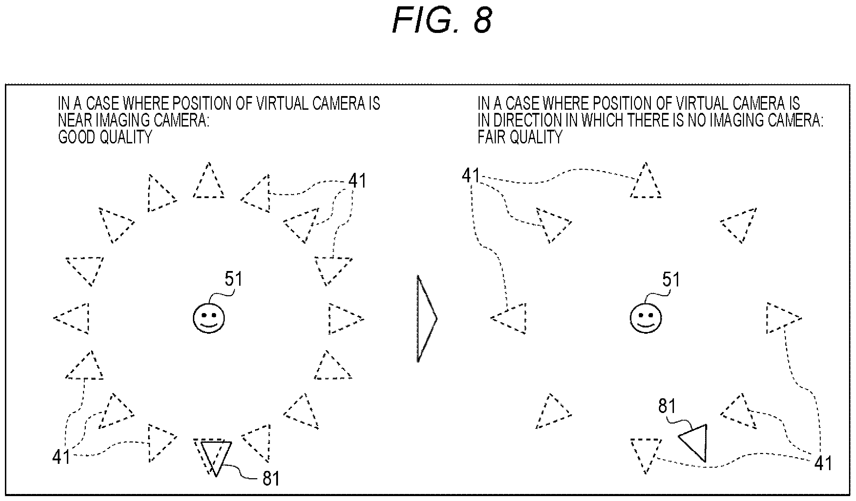

The left diagram in Fig. 8 illustrates a case where the direction of the virtual viewpoint of rendering represented by a virtual camera 81 is close to a direction of any of the imaging viewpoints of the plurality of textures represented by the imaging camera 41 with respect to the virtual object (3D model 51) virtually disposed in the real space. In a case where the number of imaging cameras 41 that acquire a captured image to be a texture is large, the direction of the virtual viewpoint of rendering is close to the direction of the imaging viewpoint of any of the textures regardless of the position where the virtual camera 81 is disposed. In this case, the image (virtual image) of the virtual object generated by rendering has high image quality. The right diagram in Fig. 8 illustrates a case where the direction of the virtual viewpoint of rendering represented by the virtual camera 81 is away from a direction of any of the imaging viewpoints of the plurality of textures represented by the imaging camera 41. In a case where the number of imaging cameras 41 that acquire a captured image to be a texture is small, such a situation is likely to occur. In this case, the image quality of the image (virtual image) of the virtual object generated by rendering is degraded.

That is, when the number of textures is reduced in order to reduce the amount of data of the virtual object, there is a high possibility that the image quality of the image of the virtual object generated by rendering is degraded depending on the position of the virtual viewpoint of rendering (the camera of the portable terminal 71). In the first embodiment, in order to suppress such degradation in image quality, the direction of the viewpoint (virtual viewpoint) of the camera of the portable terminal 71, which is the virtual viewpoint of rendering, is guided with the display of the viewing guide on the portable terminal 71 so as to match (approach) the direction of any of the imaging viewpoints of the textures with respect to the arrangement position of the virtual object (3D model 51). That is, in the first embodiment, in a case where the 3D model 51 is mapped using the texture corresponding to each of a plurality of specific directions with respect to the 3D model 51, the direction of the viewpoint (viewing viewpoint) of the camera with respect to the 3D model 51 is guided by the viewing guide so as to match any of the specific directions. Note that the plurality of specific directions corresponds to directions of imaging viewpoints of the textures.

<Operation procedure of first embodiment>

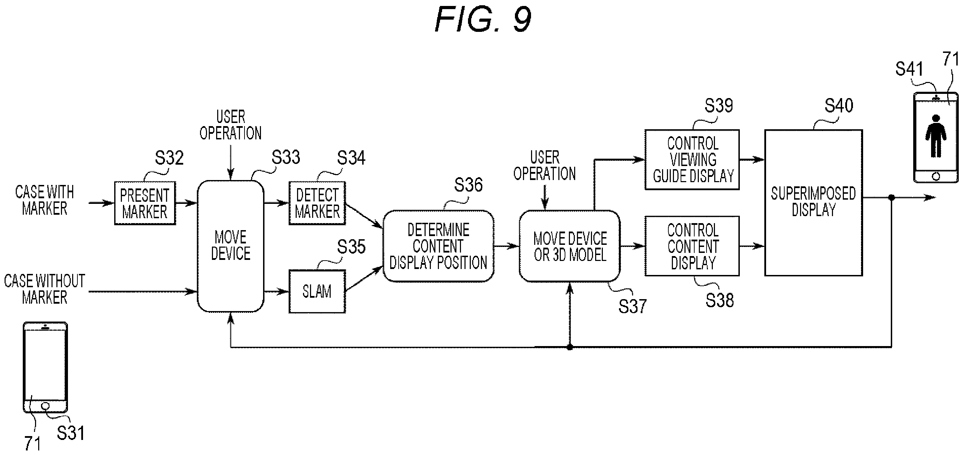

Fig. 9 is a flowchart illustrating an operation procedure in a case where an image of the virtual object described above is combined as content with an image of a real space by an AR technology and displayed on a display device (portable terminal) in the first embodiment. In Fig. 9, steps S31 to S36 are the same as steps S101 to S106 in Fig. 6, and thus description thereof is omitted.

In step S37, the user moves the portable terminal 71 or the virtual object (3D model) according to the content (image of the virtual object) and the viewing guide displayed on the portable terminal 71 in steps S38 to S41 as described later. With this arrangement, the direction of the virtual viewpoint of rendering with respect to the virtual object is matched (brought close) to the direction of the imaging viewpoint of any of the textures with respect to the virtual object.

In step S38, the portable terminal 71 generates a content image in which content (an image of a virtual object) is superimposed on the image captured by the portable terminal 71 at the position determined in step S35. In step S39, the portable terminal 71 generates a viewing guide (guide image) as described later on the basis of the position of the virtual object virtually disposed in the real space and the position of the viewing viewpoint (viewpoint of the camera of the portable terminal 71) of rendering. In step S40, the portable terminal 71 performs control to generate a display image (output image) in which the content image generated in step S38 and the viewing guide generated in step S39 are superimposed, and display the display image on the display. In step S41, the display image generated in step S40 is displayed on the display of the portable terminal 71. The procedure from step S37 to step S41 is repeatedly performed.

<Viewing guide>

The viewing guide generated in step S39 of Fig. 9 will be described. There are two types of viewing guides, for example, one is a viewing guide A and the other is a viewing guide B. The viewing guide A and the viewing guide B may be simultaneously displayed on the portable terminal 71, or only one of the viewing guide A and the viewing guide B may be displayed, or may be switched and displayed according to the situation.

(Viewing guide A)

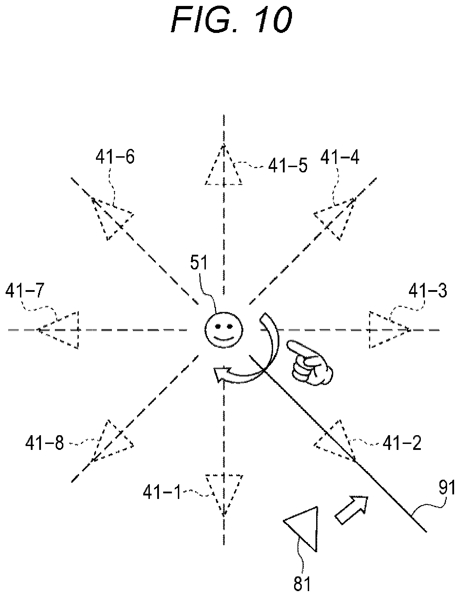

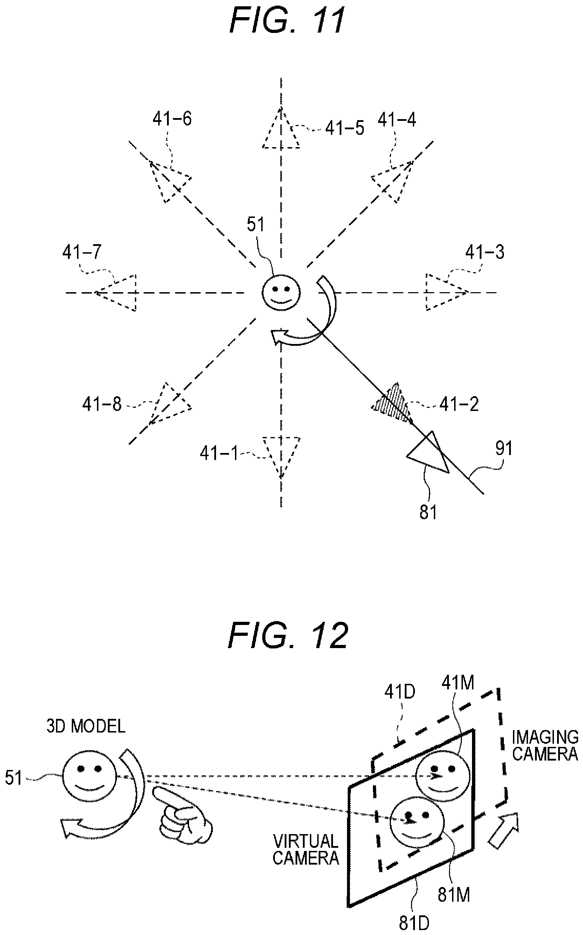

Figs. 10 and 11 are diagrams illustrating the viewing guide A. In Figs. 10 and 11, the 3D model 51 represents a 3D shape of a virtual object virtually disposed in a real space. The imaging cameras 41-n (n is 1 to 8) represent the positions of the imaging viewpoints of the textures. The virtual camera 81 represents the position of the virtual viewpoint (viewing viewpoint) of rendering, and represents the position of the viewpoint of the camera of the portable terminal 71 in the real space. A guideline 91 represents a direction (closest direction) closest to the direction (the direction of the viewing viewpoint of rendering) of the virtual camera 81 with respect to the 3D model 51 among the directions of the imaging cameras 41-n (the directions of the imaging viewpoints of the textures) with respect to the 3D model 51 (for example, the barycentric position of the 3D model 51). The closest direction indicates a direction of a straight line, among straight lines connecting the 3D model 51 and the imaging cameras 41-n, in which an angle formed by the straight line connecting the 3D model 51 and the virtual camera 81 is minimized. In Fig. 10, the direction of the imaging camera 41-2 is the closest to that of the virtual camera 81, and the guideline 91 is a straight line in a direction from the 3D model 51 to the imaging camera 41-2. Note that the directions of the imaging cameras 41-n with respect to the 3D model 51 is simply referred to as the directions of the imaging cameras 41-n, and the direction of the virtual camera 81 with respect to the 3D model 51 is simply referred to as the direction of the virtual cameras 81-n.

The viewing guide A may be a planar image as illustrated in Fig. 10 representing the positional relationship between at least the virtual camera 81 and the guideline 91 among the 3D model 51, the virtual camera 81, the imaging cameras 41-n, and the guideline 91. The viewing guide A is not limited thereto, and may be an image in which the guideline 91 is threedimensionally superimposed and displayed in the content image (the image of the real space and the image of the virtual object) displayed on the portable terminal 71. The guideline 91 may be a case of indicating the directions of any one or a plurality of imaging cameras 41-n instead of the direction of the imaging camera 41-n closest to the direction of the virtual camera 81 (the direction of the viewing viewpoint of rendering).

As illustrated in Fig. 10, in a case where the direction of the virtual camera 81 is not close to a direction of any of the imaging cameras 41-n, the user refers to the viewing guide A and moves the portable terminal 71, or moves (rotationally moves or translates) the virtual object such that the virtual camera 81 (the viewpoint of the camera of the portable terminal 71) overlaps the guideline 91. The movement of the virtual object can be performed, for example, by dragging an image of the virtual object in the content image displayed on the display of the portable terminal 71. Note that the display includes a touch panel, and a drag operation or the like on the virtual object can be performed by a finger operation on the display. The movement of the virtual object may be a movement of a three-dimensional coordinate system virtually set in the real space in the portable terminal 71.

In a case where the direction of the virtual camera 81 matches the direction indicated by the guideline 91 as illustrated in Fig. 11, the portable terminal 71 performs an effect display (display of an effect image) for notifying the user of the fact. The case where the direction of the virtual camera 81 matches the direction indicated by the guideline 91 may be a case where the angle (angle difference) formed by the direction of the virtual camera 81 and the direction indicated by the guideline 91 is equal to or less than a predetermined threshold value. The effect display may be in any form such as switching the viewing guide A from display to non-display in a case where the direction of the virtual camera 81 matches the direction indicated by the guideline 91, switching the display form (display form such as color, lighting, and blinking) of the imaging camera 41-2 on the guideline 91 as illustrated in Fig. 11, switching the display form (including non-display) of the guideline 91, or displaying characters, images, and the like making a notification of matching.

(Viewing guide B)

Fig. 12 is a diagram illustrating the viewing guide B. In Fig. 12, a 3D model 51 represents a 3D shape of a virtual object virtually disposed in the real space. An image 81D is an image of a projection plane disposed in the direction of the virtual camera 81, and includes a projection image 81M of the 3D model 51 perspectively projected on the projection plane. A projection image 81M is, for example, a silhouette image of a virtual object, and is a monochrome image indicating only a shape (contour) of the virtual object to which a texture is not pasted. Note that the image 81D is an image obtained by projecting the 3D model 51 on an actual projection plane on which a real object in a real space is projected by the camera of the portable terminal 71.

An image 41D is an image of a projection plane disposed in the direction of the imaging camera 41-n closest to the direction of the virtual camera 81, and includes a projection image 41M of the 3D model 51 subjected to perspective projection. As in the projection image 81M, the projection image 41M is a silhouette image of a virtual object, and is a monochrome image showing only a shape (contour) of the virtual object to which a texture is not pasted. Note that the image 41D is an image obtained by projecting the 3D model 51 on an actual projection plane on which the real object in the real space is projected when the direction of the virtual camera 81 (the direction of the camera of the portable terminal 71) is matched to the direction of the imaging camera 41-n closest to the direction.

The projection image 81M of the image 81D and the projection image 41M of the image 41D are combined with each other in the image 81D while maintaining the positional relationship in projection position between them in the three-dimensional coordinate system virtually set in the real space. With this arrangement, the image 81D includes the projection image 81M obtained by projecting the 3D model 51 in the direction of the virtual camera 81 and the projection image 41M obtained by projecting the 3D model 51 in the direction of the imaging camera 41-n closest to the direction of the virtual camera 81. Note that the projection image 81M indicating the positional relationship of the projection position with the projection image 41M may not be a projection image in the direction of the imaging camera 41-n closest to the direction of the virtual camera 81, and may be a projection image in the direction of any one or a plurality of imaging cameras 41-n.

The viewing guide B is the image 81D, and in a case where the display positions of the projection image 81M and the projection image 41M in the image 81D do not match each other (in a case where the deviation therebetween is large), it indicates that the direction of the virtual camera 81 is not close to a direction of any of the imaging cameras 41-n. In a case where the display positions of the projection image 81M and the projection image 41M in the image 81D do not match each other, the user refers to the viewing guide B and moves the portable terminal 71 or moves (rotationally moves or translates) the virtual object such that the display positions of the projection image 81M and the projection image 41M match each other (overlap each other). The movement of the virtual object can be performed, for example, by dragging the projection image 81M which is a silhouette image of the virtual object in the viewing guide B.

In a case where the display positions of the projection image 81M and the projection image 41M in the viewing guide B match each other and the direction of the virtual camera 81 matches the direction of any of the imaging cameras 41-n, the portable terminal 71 performs an effect display (display of an effect image) for notifying the user of the matching. Note that the case where the display positions of the projection image 81M and the projection image 41M in the viewing guide B match each other may be a case where the deviation amount between the display positions of them is equal to or less than a predetermined threshold value. The effect display may be in any form such as switching the viewing guide B from display to non-display in a case where the display positions of the projection image 81M and the projection image 41M match, switching the display form (display form such as color, lighting, or blinking) of at least one of the projection image 81M or the projection image 41M, or displaying characters, images, or the like making a notification of matching.

In a case where the direction of the virtual camera 81 matches the direction of any of the imaging cameras 41-n according to the viewing guide A or the viewing guide B as described above, a content image in which content (an image of a virtual object) generated by rendering is superimposed on an image captured by the camera of the portable terminal 71 is displayed on the portable terminal 71. At this time, since the texture used for mapping is the captured image obtained by the imaging camera 41-n whose direction matches the direction of the virtual camera 81, a high image quality content image (rendered image) is displayed on the display of the portable terminal 71. With this arrangement, the user can easily adjust the position of the portable terminal 71, the direction of the virtual object, and the like so that a high image quality content image can be viewed.

<Configuration of display unit 18 in first embodiment>

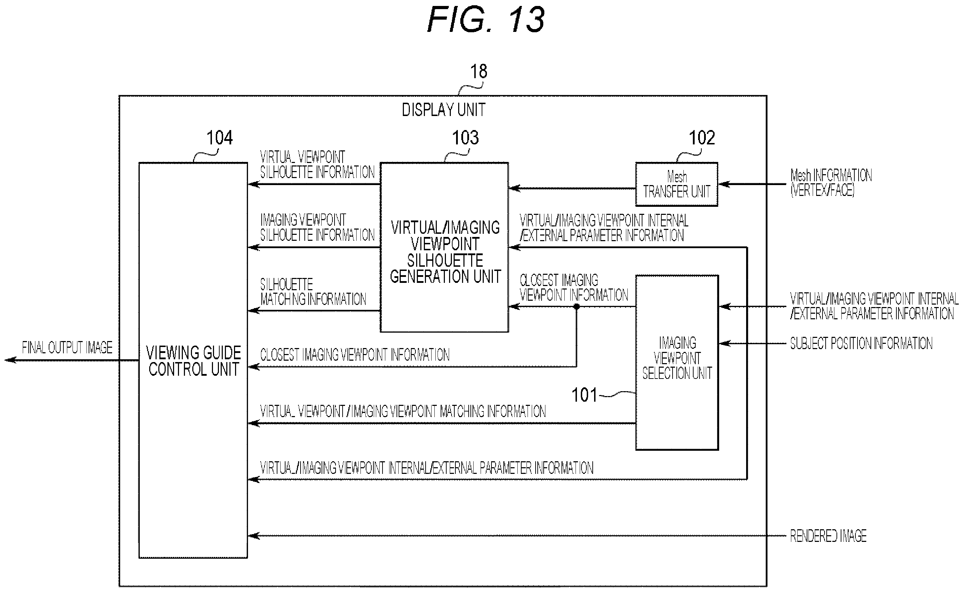

A specific configuration and process of the display unit 18 of Fig. 1 in the first embodiment will be described. Fig. 13 is a block diagram illustrating a configuration example of the display unit 18. The display unit 18 includes an imaging viewpoint selection unit 101, a Mesh transfer unit 102, a virtual/imaging viewpoint silhouette generation unit 103, and a viewing guide control unit 104.

The imaging viewpoint selection unit 101 outputs information (closest imaging viewpoint information) indicating the imaging viewpoint closest to the virtual viewpoint and information (virtual viewpoint/imaging viewpoint matching information) indicating that the virtual viewpoint and the imaging viewpoint match each other on the basis of information (virtual/imaging viewpoint internal/external parameter information) about internal parameters and external parameters of the virtual camera 81 (virtual viewpoint) and the imaging camera 41-n (imaging viewpoint) and position information (subject position information) about the subject (virtual object (3D model 51)). The closest imaging viewpoint information is supplied to the virtual/imaging viewpoint silhouette generation unit 103 and the viewing guide control unit 104, and the virtual viewpoint/imaging viewpoint matching information is supplied to the viewing guide control unit 104.

Note that the imaging viewpoint having a direction closest to the direction of the virtual viewpoint with respect to the virtual object is expressed as an imaging viewpoint closest to the virtual viewpoint, and the matching between the direction of the virtual viewpoint with respect to the virtual object and the direction of the imaging viewpoint is expressed as the matching between the virtual viewpoint and the imaging viewpoint. That is, the case where the two viewpoints are close or match each other is not limited to the case where the positions of the two viewpoints are close or match each other, but includes the case where the directions of the two viewpoints with respect to the virtual object are close or match each other.

The Mesh transfer unit 102 supplies Mesh information representing the 3D shape of the virtual object (3D model 51) by vertices or faces to the virtual/imaging viewpoint silhouette generation unit 103.

On the basis of the Mesh information, the internal/external parameter information about the virtual/imaging viewpoint, and the closest imaging viewpoint information, the virtual/imaging viewpoint silhouette generation unit 103 supplies, to the viewing guide control unit 104, virtual viewpoint silhouette information indicating the projection image 81M (silhouette image) obtained by projecting the 3D model 51 in the direction of the virtual camera 81 in Fig. 12, imaging viewpoint silhouette information indicating the projection image 41M (silhouette image) obtained by projecting the 3D model 51 in the direction of the imaging camera 41-n closest to the direction of the virtual camera 81, and silhouette matching information indicating that the projection image 81M and the projection image 41M match with each other.

The viewing guide control unit 104 generates a final output image to be displayed on the display from the virtual viewpoint silhouette information, the imaging viewpoint silhouette information, the silhouette matching information, the closest imaging viewpoint information, the virtual viewpoint/imaging viewpoint matching information, the virtual/imaging viewpoint internal/external parameter information, and the rendered image. The rendered image is an image (content image) of the virtual object generated by the rendering (rendering unit 17) using the virtual viewpoint as a viewing viewpoint of the rendering. The rendered image may be an image in which an image of a virtual object is combined with an image of a real space, or may be an image of only a virtual object.

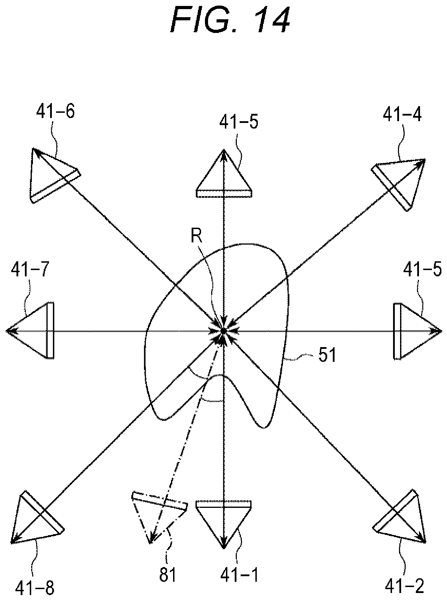

Here, the imaging viewpoint selection unit 101 detects the imaging viewpoint closest to the virtual viewpoint as follows, for example. As in Fig. 10, Fig. 14 illustrates an example of calculating a degree of importance P(i) of each imaging camera 41-n on the basis of the relationship between the direction of the virtual object (3D model 51) from each imaging camera 41-n (imaging viewpoint) (the direction of each imaging camera 41-n with respect to the virtual object) and the direction of the virtual object (3D model 51) from the virtual camera 81 (virtual viewpoint). In this case, the degree of importance P(i) is calculated by the following equation (1).

$$P(i)=1/arccos(Ci \cdot Cv) \dots (1)$$

Here, Ci represents a vector from the imaging camera 41-n to the 3D model 51 (reference position R). Cv represents a vector from the virtual camera 81 to the 3D model 51 (reference position R). Ci·Cv represents an inner product of the vector Ci and the vector Cv.

Therefore, the degree of importance P(i) is inversely proportional to the angle formed by the vector Ci and the vector Cv, and the smaller the angle formed by the vector Ci and the vector Cv, the higher the degree of importance P(i). That is, the imaging camera 41-n whose direction with respect to the 3D model 51 is closer to that of the virtual camera 81 has a higher degree of importance P(i).

Note that the vector Ci and the vector Cv are set with reference to a representative point R of the 3D model 51. The representative point R can be set by any method. For example, a point on the 3D model 51 at which the sum of the distances from the optical axes of each imaging camera 41-n and the virtual camera 81 is minimum is set as the representative point R. Alternatively, for example, an intermediate position between the maximum value and the minimum value of the coordinates of the vertices of the 3D model 51 in each of the X direction, the Y direction, and the Z direction in the three-dimensional coordinate system virtually set in the real space is set as the representative point R. Alternatively, for example, the most important position in the 3D model 51 is set as the representative point R. For example, in a case where the 3D model 51 is a human, the center of the face of the person or the like is set as the representative point R.

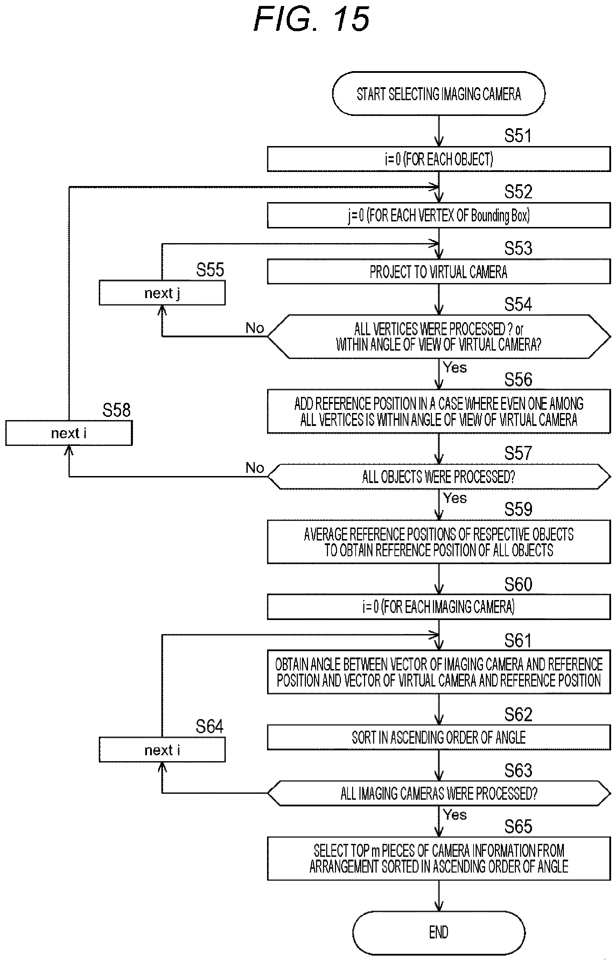

Fig. 15 is a flowchart illustrating a procedure in which the imaging viewpoint selection unit 101 detects the imaging viewpoint (imaging camera 41-n) closest to the virtual viewpoint (virtual camera 81) in a case where there is a plurality of virtual objects (3D models 51). Note that Fig. 15 illustrates a process in a case where m imaging viewpoints are detected in order of proximity to the virtual viewpoint, and the closest imaging viewpoint can be detected by setting m=l.

In step S51, the imaging viewpoint selection unit 101 sets the parameter i indicating the number assigned to the plurality of virtual objects to 0. In step S52, the imaging viewpoint selection unit 101 sets the parameter j indicating the number assigned to the vertex of the bounding box (rectangular frame) including each virtual object to 0. In step S53, the imaging viewpoint selection unit 101 projects the j-th vertex onto the projection plane of the virtual camera 81. In step S54, the imaging viewpoint selection unit 101 determines whether or not all the vertices of the bounding box of the i-th virtual object have been projected onto the projection plane of the virtual camera 81 or whether or not the j-th vertex is within the angle of view of the virtual camera 81. In a case where it is determined in step S54 that the projection onto the projection plane of the virtual camera 81 has not been performed on all the vertices of the bounding box of the i-th virtual object, or in a case where it is determined that the j-th vertex is not within the angle of view of the virtual camera 81, the imaging viewpoint selection unit 101 increments the parameter j in step S55 and returns the process to step S53.

In a case where it is determined in step S54 that the projection onto the projection plane of the virtual camera 81 has been performed on all the vertices of the bounding box of the i-th virtual object, or in a case where it is determined that the j-th vertex is within the angle of view of the virtual camera 81, the process proceeds to step S56. In step S56, in a case where any one of the vertices of the bounding box of the i-th virtual object is within the angle of view of the virtual camera 81, the imaging viewpoint selection unit 101 adds the reference position of the i-th virtual object (for example, the center position of the bounding box) as the target reference position.

In step S57, the imaging viewpoint selection unit 101 determines whether or not the process in steps S52 to S57 has been performed on all the virtual objects. In a case of negative determination in step S57, the imaging viewpoint selection unit 101 increments the parameter i in step S58 and returns the process to step S52.

In the case of affirmative determination in step S57, the imaging viewpoint selection unit 101 advances the process to step S59. In step S59, the imaging viewpoint selection unit 101 averages the reference positions of the virtual objects added as the target reference positions in step S56 to obtain the reference position (hereinafter, simply referred to as a reference position) of all the virtual objects.

In step S60, the imaging viewpoint selection unit 101 sets the parameter i indicating the number assigned to the imaging camera 41-n to 0. In step S61, the imaging viewpoint selection unit 101 calculates an angle between a vector connecting the i-th imaging camera 41 (imaging viewpoint) and the reference position and a vector connecting the virtual camera 81 (virtual viewpoint) and the reference position. In step S62, the imaging viewpoint selection unit 101 sorts the imaging cameras 41 in ascending order of the angle calculated in step S61. In step S63, the imaging viewpoint selection unit 101 determines whether or not the process in steps S61 and S62 has been performed on all the imaging cameras 41. In a case of negative determination in step S63, the imaging viewpoint selection unit 101 increments the parameter i in step S64 and returns the process to step S61. In the case of affirmative determination in step S63, the process proceeds to step S65. In step S65, the imaging viewpoint selection unit 101 detects the top m imaging cameras 41 among the imaging cameras 41 sorted in ascending order of angle in step S62 as the m imaging cameras 41 in order of proximity to the virtual camera 81.

<Configuration example of virtual/imaging viewpoint silhouette generation unit 103>

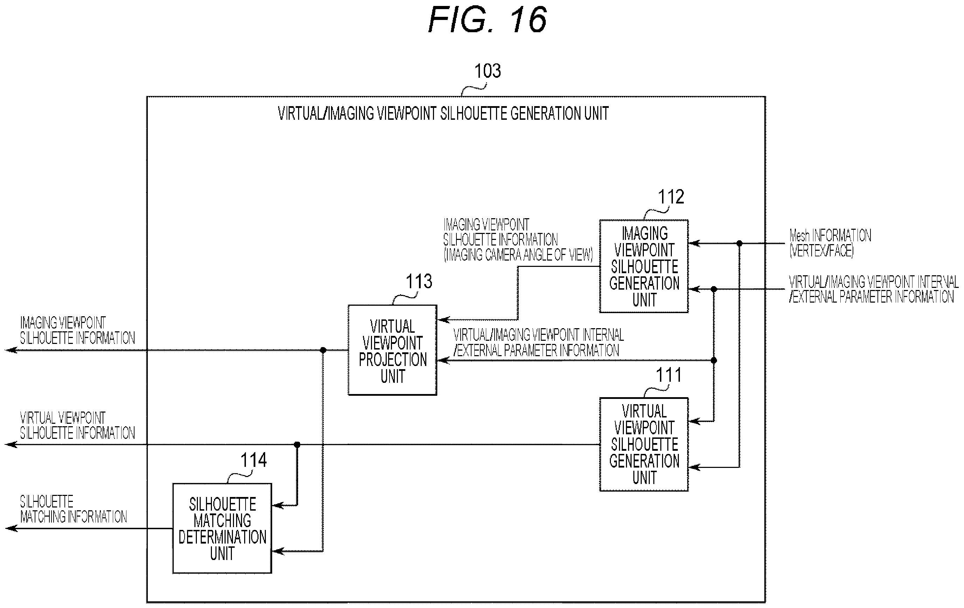

Fig. 16 is a block diagram illustrating a configuration example of the virtual/imaging viewpoint silhouette generation unit 103 in Fig. 13. The virtual/imaging viewpoint silhouette generation unit 103 includes a virtual viewpoint silhouette generation unit 111, an imaging viewpoint silhouette generation unit 112, a virtual viewpoint projection unit 113, and a silhouette matching determination unit 114.

The virtual viewpoint silhouette generation unit 111 generates virtual viewpoint silhouette information from the Mesh information and the internal/external parameter information about the virtual/imaging viewpoint. The virtual viewpoint silhouette information is supplied to the viewing guide control unit 104.

The imaging viewpoint silhouette generation unit 112 generates imaging viewpoint silhouette information about the imaging camera angle of view from the Mesh information and the internal/external parameter information about the virtual/imaging viewpoints, and supplies the imaging viewpoint silhouette information to the virtual viewpoint projection unit 113. The imaging camera angle of view represents the angle of view of the imaging camera 41-n closest to the virtual camera 81.

The virtual viewpoint projection unit 113 converts the imaging viewpoint silhouette information about the imaging camera angle of view into the imaging viewpoint silhouette information about the virtual camera angle of view on the basis of the internal/external parameter information about the virtual/imaging viewpoint, and supplies the imaging viewpoint silhouette information to the viewing guide control unit 104. The virtual camera angle of view represents the angle of view of the virtual camera 81.

The silhouette matching determination unit 114 supplies the silhouette matching information to the viewing guide control unit 104 on the basis of the virtual viewpoint silhouette information and the imaging viewpoint silhouette information.

<Configuration example of viewing guide control unit 104>

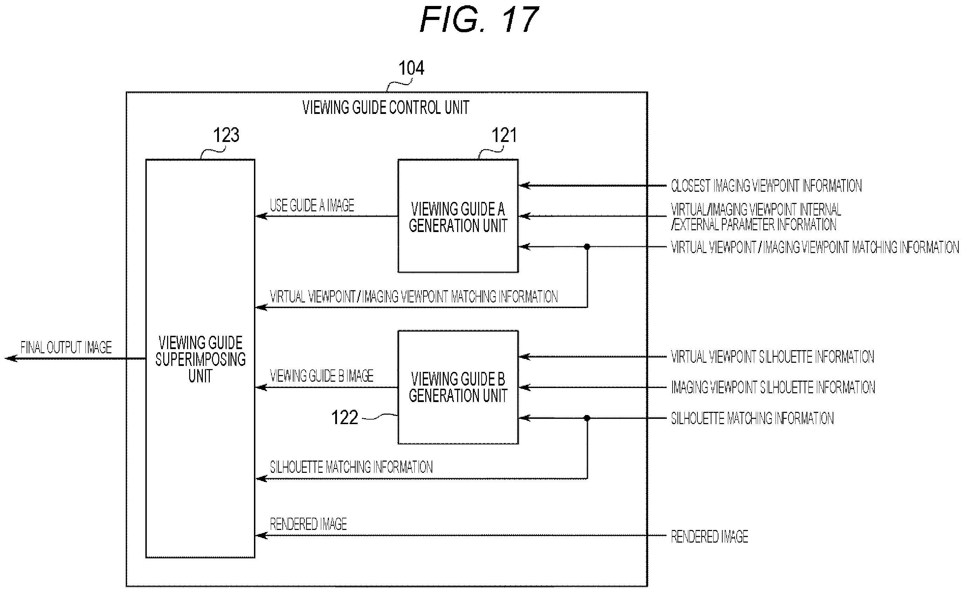

Fig. 17 is a block diagram illustrating a configuration example of the viewing guide control unit 104 in Fig. 13. The viewing guide control unit 104 includes a viewing guide A generation unit 121, a viewing guide B generation unit 122, and a viewing guide superimposing unit 123.

The viewing guide A generation unit 121 generates an image of the viewing guide A (viewing guide A image) on the basis of the closest imaging viewpoint information, the internal/external parameter information about the virtual/imaging viewpoint, and the virtual viewpoint/imaging viewpoint matching information, and supplies the generated image to the viewing guide superimposing unit 123.

The viewing guide B generation unit 122 generates an image of the viewing guide B (viewing guide B image) on the basis of the virtual viewpoint silhouette information, the imaging viewpoint silhouette information, and the silhouette matching information, and supplies the generated image to the viewing guide superimposing unit 123.

The viewing guide superimposing unit 123 superimposes the viewing guide A image, the viewing guide B image, and the rendered image on the basis of the virtual viewpoint/imaging viewpoint matching information and the silhouette matching information to output the superimposed images to the display as a final output image.

<Display pattern of viewing guide>

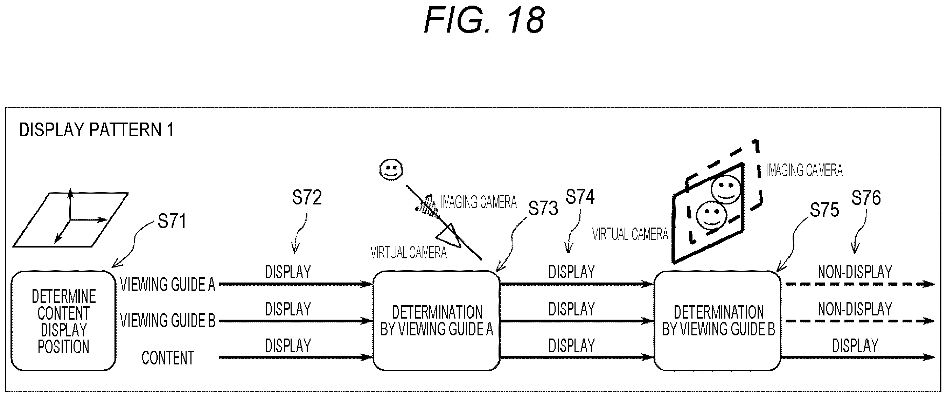

Two display patterns 1 and 2 will be exemplified for the display patterns of the viewing guide A and the viewing guide B. Fig. 18 is a flowchart illustrating the display pattern 1. In Fig. 18, in step S71, the portable terminal 71 determines a position at which the content is displayed in the image captured by the camera. Step S71 corresponds to the process of step S33 of Fig. 9 (step S106 of Fig. 6). In step S72, the portable terminal 71 displays all of the viewing guide A, the viewing guide B, and the content image on the display. In step S73, the user moves the content or the portable terminal 71 (virtual camera) on the basis of the viewing guide A to match the position of the virtual camera 81 (virtual viewpoint) to the position of the closest imaging camera 41-n (imaging viewpoint). That is, the direction of the virtual camera 81 with respect to the virtual object is matched to the direction of the closest imaging camera 41-n.

In step S74 after determining that the virtual camera 81 (virtual viewpoint) matches the position of the closest imaging camera 41-n (imaging viewpoint) in the viewing guide A, the portable terminal 71 continuously displays all of the viewing guide A, the viewing guide B, and the content image on the display. In step S75, the user moves the content or the portable terminal 71 (virtual camera) on the basis of the viewing guide B to match the position of the virtual camera 81 (virtual viewpoint) to the position of the closest imaging camera 41-n (imaging viewpoint). That is, as illustrated in Fig. 12, the user matches the display position of the projection image 81M that is a silhouette image obtained by projecting a virtual object in the direction of the virtual camera 81 to the display position of the projection image 41M that is a silhouette image obtained by projecting a virtual object in the direction of the imaging camera 41-n in the viewing guide B. In step S76 after determining that the virtual camera 81 (virtual viewpoint) matches the position of the closest imaging camera 41-n (imaging viewpoint) in the viewing guide B, the portable terminal 71 hides the viewing guide A and the viewing guide B and displays only the content image on the display. Note that after matching the virtual camera 81 (virtual viewpoint) to the position of the closest imaging camera 41-n (imaging viewpoint) in the viewing guide B, the virtual camera 81 (virtual viewpoint) may be matched to the position of the closest imaging camera 41-n (imaging viewpoint) in the viewing guide A.

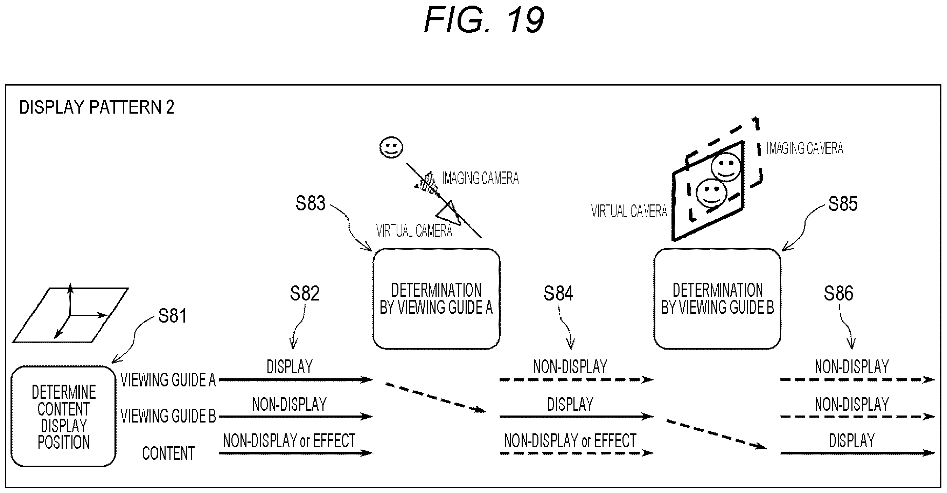

Fig. 19 is a flowchart illustrating the display pattern 2. In Fig. 19, in step S81, the portable terminal 71 determines a position at which the content is displayed in the image captured by the camera. Step S81 corresponds to the process of step S71 in Fig. 18 and step S33 in Fig. 9 (step S106 in Fig. 6). In step S82, the portable terminal 71 displays only the viewing guide A on the display, and hides the viewing guide B and the content image. However, in the content image, for example, an image of a virtual object may be effect displayed as a silhouette image. In step S83, the user moves the content or the portable terminal 71 (virtual camera 81) on the basis of the viewing guide A to match the position of the virtual camera 81 (virtual viewpoint) to the position of the closest imaging camera 41-n (imaging viewpoint). That is, the direction of the virtual camera 81 with respect to the virtual object is matched to the direction of the closest imaging camera 41-n.

In step S84 after determining that the virtual camera 81 (virtual viewpoint) matches the position of the closest imaging camera 41-n (imaging viewpoint) in the viewing guide A, the portable terminal 71 hides the viewing guide A and displays the viewing guide B on the display. Note that the content image may be hidden or may be effect displayed. In step S85, the user moves the content or the portable terminal 71 (virtual camera) on the basis of the viewing guide B to match the position of the virtual camera 81 (virtual viewpoint) to the position of the closest imaging camera 41-n (imaging viewpoint). That is, as illustrated in Fig. 12, the user matches the display position of the projection image 81M that is a silhouette image obtained by projecting a virtual object in the direction of the virtual camera 81 to the display position of the projection image 41M that is a silhouette image obtained by projecting a virtual object in the direction of the imaging camera 41-n in the viewing guide B. In step S86 after determining that the virtual camera 81 (virtual viewpoint) matches the position of the closest imaging camera 41-n (imaging viewpoint) in the viewing guide B, the portable terminal 71 hides the viewing guide A and the viewing guide B and displays only the content image on the display. Note that after matching the virtual camera 81 (virtual viewpoint) to the position of the closest imaging camera 41-n (imaging viewpoint) in the viewing guide B, the virtual camera 81 (virtual viewpoint) may be matched to the position of the closest imaging camera 41-n (imaging viewpoint) in the viewing guide A.

<Program>

A series of processes in one or a plurality of components (component device such as the portable terminal 71) of the information processing system 1 described above can be executed by hardware or software. In a case where a series of processes are executed by the software, a program which forms the software is installed on a computer. Here, the computer includes a computer incorporated in dedicated hardware, a general-purpose personal computer capable of executing various functions by installing various programs, and the like, for example.

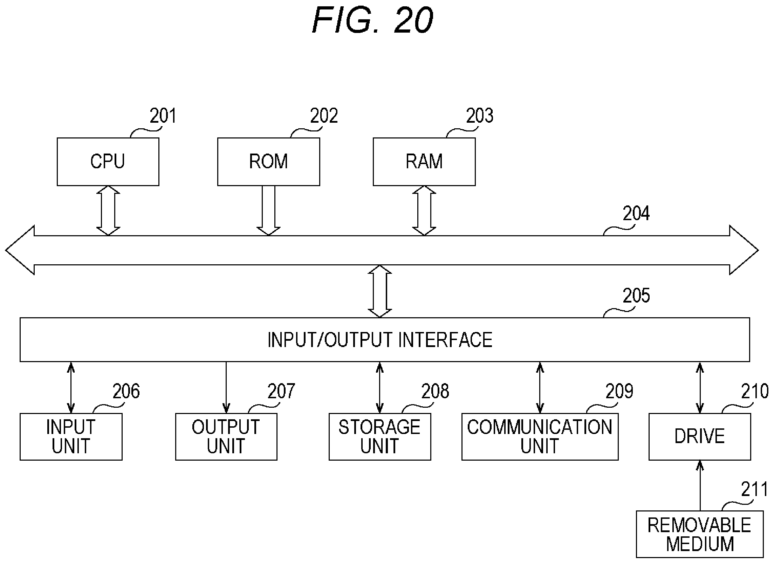

Fig. 20 is a block diagram illustrating a configuration example of hardware of a computer in a case where the computer executes each process executed by one or a plurality of components (configuration device such as the portable terminal 71) of the information processing system 1 by a program.

In the computer, a central processing unit (CPU) 201, a read only memory (ROM) 202, and a random access memory (RAM) 203 are connected to each other by a bus 204.

An input/output interface 205 is further connected to the bus 204. The input/output interface 205 is connected to an input unit 206, an output unit 207, a storage unit 208, a communication unit 209, and a drive 210.

The input unit 206 includes a keyboard, a mouse, a microphone, and the like. The output unit 207 includes a display, a speaker, and the like. The storage unit 208 includes a hard disk, a nonvolatile memory, and the like. The communication unit 209 includes a network interface and the like. The drive 210 drives a removable medium 211 such as a magnetic disk, an optical disk, a magnetooptical disk, or a semiconductor memory.

In the computer configured as described above, for example, the CPU 201 loads the program stored in the storage unit 208 into the RAM 203 via the input/output interface 205 and the bus 204 and executes the program, to thereby perform the above-described series of processes.

The program executed by the computer (CPU 201) can be provided by being recorded on the removable medium 211 as a package medium or the like, for example. Furthermore, the program can be provided via a wired or wireless transmission medium such as a local area network, the Internet, or digital satellite broadcasting.

In the computer, installation of the program on the storage unit 208 via the input/output interface 205 can be achieved by insertion of the removable medium 211 into the drive 210. Alternatively, installation of the program on the storage unit 208 can be achieved by reception of the program at the communication unit 209 via a wired or wireless transmission medium. Additionally, the program may be installed in advance on the ROM 202 and the storage unit 208.

Note that the program executed by the computer may be a program for processing in time series in the order described in the present specification, or a program for processing in parallel or at a necessary timing such as when a call is made.

The present technology can also have the following configurations.

    (1) An information processing device including

        a display unit that generates, by rendering, an image of a 3D model when the 3D model is viewed from a viewing viewpoint set and changed by a user and maps the 3D model using a texture corresponding to each of a plurality of specific directions with respect to the 3D model at a time of the rendering,
        the display unit being configured to generate a guide image for guiding a direction of the viewing viewpoint to match any of the plurality of specific directions.

    (2) The information processing device according to clause (1),
    in which the display unit generates the guide image for guiding a direction of the viewing viewpoint to a specific direction, among the plurality of specific directions, closest to the direction of the viewing viewpoint.

    (3) The information processing device according to clause (1) or (2),
    in which the display unit generates a guideline indicating the specific direction as the guide image.

    (4) The information processing device according to clause (3),
    in which the display unit generates the guide image representing a positional relationship between a position of the 3D model, a position of the viewing viewpoint, and the guideline.

    (5) The information processing device according to any one of clauses (1) to (4),
    in which the display unit generates the guide image representing a positional relationship in projection position between a first projection image obtained by projecting the 3D model in a direction of the viewing viewpoint and a second projection image obtained by projecting the 3D model in the specific direction.

    (6) The information processing device according to clause (5),
    in which the display unit generates the guide image in which the first projection image and the second projection image are displayed as silhouette images.

    (7) The information processing device according to clause (5) or (6),
    in which the display unit generates the guide image in which a guideline indicating the specific direction and the positional relationship in projection position between the first projection image and the second projection image are displayed simultaneously or in a switched manner.

    (8) The information processing device according to any one of clauses (1) to (7),
    in which the texture is a captured image obtained by imaging a subject generated as the 3D model from the specific direction.

    (9) The information processing device according to any one of clause (1) to (8), further including

        a camera,
        in which the display unit sets a viewpoint of the camera as the viewing viewpoint.

    (10) The information processing device according to clause (9),
    in which the display unit virtually disposes the 3D model in a real space, and combines an image of the 3D model when the 3D model is viewed from the viewing viewpoint with an image of the real space imaged by the camera.

    (11) The information processing device according to any one of clauses (1) to (10),
    in which the display unit changes the specific direction on the basis of a movement operation of the 3D model by the user.

    (12) The information processing device according to any one of clauses (1) to (11),
    in which the display unit generates an image making a notification that a direction of the viewing viewpoint matches the specific direction.

    (13) The information processing device according to any one of clauses (1) to (12),
    in which the display unit stops display of the guide image in a case where a direction of the viewing viewpoint matches the specific direction.

    (14) An information processing method performed by a display unit,

        the display unit being included in an information processing device,
        the method including
        generating, by rendering, an image of a 3D model when the 3D model is viewed from a viewing viewpoint set and changed by a user and mapping the 3D model using a texture corresponding to each of a plurality of specific directions with respect to the 3D model at a time of the rendering, and

generating a guide image for guiding a direction of the viewing viewpoint to match any of the plurality of specific directions.

(15) A program for causing a computer to function as

a display unit that generates, by rendering, an image of a 3D model when the 3D model is viewed from a viewing viewpoint set and changed by a user and maps the 3D model using a texture corresponding to each of a plurality of specific directions with respect to the 3D model at a time of the rendering,

the display unit being configured to generate a guide image for guiding a direction of the viewing viewpoint to match any of the plurality of specific directions.

REFERENCE SIGNS LIST

| 1 | Information processing system |
|---|---|
| 11 | Data acquisition unit |
| 12 | 3D model generation unit |
| 13 | Formatting unit |
| 14 | Transmission unit |
| 15 | Reception unit |
| 16 | Decoding unit |
| 17 | Rendering unit |
| 18 | Display unit |
| 41 | Imaging camera |
| 71 | Portable terminal |
| 81 | Virtual camera |
| 91 | Guideline |
| 101 | Imaging viewpoint selection unit |
| 102 | Mesh transfer unit |
| 103 | Imaging viewpoint silhouette generation unit |
| 104 | Viewing guide control unit |
| 111 | Virtual viewpoint silhouette generation unit |
| 112 | Imaging viewpoint silhouette generation unit |
| 113 | Virtual viewpoint projection unit |
| 114 | Silhouette matching determination unit |
| 121 | Viewing guide A generation unit |
| 122 | Viewing guide B generation unit |
| 123 | Viewing guide superimposing unit |

**Claims**

1. An information processing device comprising

   a display unit that generates, by rendering, an image of a 3D model when the 3D model is viewed from a viewing viewpoint set and changed by a user and maps the 3D model using a texture corresponding to each of a plurality of specific directions with respect to the 3D model at a time of the rendering,
   the display unit being configured to generate a guide image for guiding a direction of the viewing viewpoint to match any of the plurality of specific directions.

2. The information processing device according to claim 1,
   wherein the display unit generates the guide image for guiding a direction of the viewing viewpoint to a specific direction, among the plurality of specific directions, closest to the direction of the viewing viewpoint.

3. The information processing device according to claim 1,
   wherein the display unit generates a guideline indicating the specific direction as the guide image.

4. The information processing device according to claim 3,
   wherein the display unit generates the guide image representing a positional relationship between a position of the 3D model, a position of the viewing viewpoint, and the guideline.

5. The information processing device according to claim 1,
   wherein the display unit generates the guide image representing a positional relationship in projection position between a first projection image obtained by projecting the 3D model in a direction of the viewing viewpoint and a second projection image obtained by projecting the 3D model in the specific direction.

6. The information processing device according to claim 5,
   wherein the display unit generates the guide image in which the first projection image and the second projection image are displayed as silhouette images.

7. The information processing device according to claim 5,
   wherein the display unit generates the guide image in which a guideline indicating the specific direction and the positional relationship in projection position between the first projection image and the second projection image are displayed simultaneously or in a switched manner.

8. The information processing device according to claim 1,

wherein the texture is a captured image obtained by imaging a subject generated as the 3D model from the specific direction.

9. The information processing device according to claim 1, further comprising

a camera,
wherein the display unit sets a viewpoint of the camera as the viewing viewpoint.

10. The information processing device according to claim 9,
wherein the display unit virtually disposes the 3D model in a real space, and combines an image of the 3D model when the 3D model is viewed from the viewing viewpoint with an image of the real space imaged by the camera.

11. The information processing device according to claim 1,
wherein the display unit changes the specific direction on a basis of a movement operation of the 3D model by the user.

12. The information processing device according to claim 1,
wherein the display unit generates an image making a notification that a direction of the viewing viewpoint matches the specific direction.

13. The information processing device according to claim 1,
wherein the display unit stops display of the guide image in a case where a direction of the viewing viewpoint matches the specific direction.

14. An information processing method performed by a display unit,
the display unit being included in an information processing device, the method comprising:

generating, by rendering, an image of a 3D model when the 3D model is viewed from a viewing viewpoint set and changed by a user and mapping the 3D model using a texture corresponding to each of a plurality of specific directions with respect to the 3D model at a time of the rendering; and
generating a guide image for guiding a direction of the viewing viewpoint to match any of the plurality of specific directions.

15. A program for causing a computer to function as

a display unit that generates, by rendering, an image of a 3D model when the 3D model is viewed from a viewing viewpoint set and changed by a user and maps the 3D model using a texture corresponding to each of a plurality of specific directions with respect to the 3D model at a time of the rendering,
the display unit being configured to generate a guide image for guiding a direction of the viewing viewpoint to match any of the plurality of specific directions.

# FIG. 1

| 11 | 12 | 13 | 14 |
|---|---|---|---|
| DATA ACQUISITION UNIT | 3D MODEL GENERATION UNIT | FORMATTING UNIT | TRANSMISSION UNIT |

| DISPLAY UNIT | RENDERING UNIT | DECODING UNIT | RECEPTION UNIT |
|---|---|---|---|
| 18 | 17 | 16 | 15 |

# FIG. 2

# FIG. 3

```
          ╭─────────────────╮
          │  START PROCESS   │
          ╰─────────────────╯
                   │
                   ▼        S11
          ┌─────────────────┐
          │   ACQUIRE DATA   │
          └─────────────────┘
                   │
                   ▼        S12
          ┌─────────────────┐
          │ GENERATE 3D MODEL│
          └─────────────────┘
                   │
                   ▼        S13
          ┌─────────────────┐
          │   FORM FORMAT    │
          └─────────────────┘
                   │
                   ▼        S14
          ┌─────────────────┐
          │    TRANSMIT      │
          └─────────────────┘
                   │
                   ▼        S15
          ┌─────────────────┐
          │    RECEIVE       │
          └─────────────────┘
                   │
                   ▼        S16
          ┌─────────────────┐
          │PERFORM DECODE PROCESS│
          └─────────────────┘
                   │
                   ▼        S17
          ┌─────────────────┐
          │ PERFORM RENDERING│
          └─────────────────┘
                   │
                   ▼        S18
          ┌─────────────────┐
          │PERFORM DISPLAY CONTROL│
          └─────────────────┘
                   │
                   ▼
          ╭─────────────────╮
          │       END        │
          ╰─────────────────╯
```

## FIG. 4

## FIG. 5

EP 4 365 848 A1

# FIG. 6

- 71
- S101
- CASE WITH MARKER
- CASE WITHOUT MARKER
- 71
- USER OPERATION
- PRESENT MARKER — S102
- MOVE DEVICE — S103
- DETECT MARKER — S104
- SLAM — S105
- DETERMINE CONTENT DISPLAY POSITION — S106
- CONTENT DISPLAY (VI) — S107
- S108 — 71

# FIG. 7

IN A CASE WHERE THERE IS NO PROBLEM
WITH AMOUNT OF DATA

IN A CASE WHERE THERE IS PROBLEM
WITH AMOUNT OF DATA

# FIG. 8

IN A CASE WHERE POSITION OF VIRTUAL CAMERA IS
NEAR IMAGING CAMERA:
GOOD QUALITY

IN A CASE WHERE POSITION OF VIRTUAL CAMERA IS
IN DIRECTION IN WHICH THERE IS NO IMAGING CAMERA:
FAIR QUALITY

FIG. 9

EP 4 365 848 A1

# FIG. 10

## FIG. 11

## FIG. 12

# FIG. 13

18

DISPLAY UNIT

104
103
102

VIRTUAL VIEWPOINT
SILHOUETTE INFORMATION

Mesh
TRANSFER UNIT

Mesh INFORMATION
(VERTEX/FACE)

IMAGING VIEWPOINT
SILHOUETTE INFORMATION

VIRTUAL/IMAGING
VIEWPOINT
SILHOUETTE
GENERATION UNIT

VIRTUAL/IMAGING VIEWPOINT INTERNAL
/EXTERNAL PARAMETER INFORMATION

SILHOUETTE
MATCHING INFORMATION

CLOSEST IMAGING
VIEWPOINT INFORMATION

VIRTUAL/IMAGING VIEWPOINT INTERNAL
/EXTERNAL PARAMETER INFORMATION

FINAL OUTPUT IMAGE

VIEWING GUIDE
CONTROL UNIT

CLOSEST IMAGING VIEWPOINT INFORMATION

IMAGING
VIEWPOINT
SELECTION UNIT

SUBJECT POSITION INFORMATION

101

VIRTUAL VIEWPOINT / IMAGING VIEWPOINT MATCHING INFORMATION

VIRTUAL/IMAGING VIEWPOINT INTERNAL/EXTERNAL PARAMETER INFORMATION

RENDERED IMAGE

EP 4 365 848 A1

# FIG. 14

# FIG. 15

START SELECTING IMAGING CAMERA

S51
i = 0 (FOR EACH OBJECT)

S52
j = 0 (FOR EACH VERTEX OF Bounding Box)

S53
PROJECT TO VIRTUAL CAMERA

S55
next j

S54
ALL VERTICES WERE PROCESSED ? or
WITHIN ANGLE OF VIEW OF VIRTUAL CAMERA?
No

Yes

S56
ADD REFERENCE POSITION IN A CASE WHERE EVEN ONE AMONG
ALL VERTICES IS WITHIN ANGLE OF VIEW OF VIRTUAL CAMERA

S58
next i

S57
ALL OBJECTS WERE PROCESSED?
No

Yes

S59
AVERAGE REFERENCE POSITIONS OF RESPECTIVE OBJECTS
TO OBTAIN REFERENCE POSITION OF ALL OBJECTS

S60
i = 0 (FOR EACH IMAGING CAMERA)

S61
OBTAIN ANGLE BETWEEN VECTOR OF IMAGING CAMERA AND REFERENCE
POSITION AND VECTOR OF VIRTUAL CAMERA AND REFERENCE POSITION

S64
next i

S62
SORT IN ASCENDING ORDER OF ANGLE

S63
ALL IMAGING CAMERAS WERE PROCESSED?

Yes

S65
SELECT TOP m PIECES OF CAMERA INFORMATION FROM
ARRANGEMENT SORTED IN ASCENDING ORDER OF ANGLE

END

## FIG. 16

VIRTUAL/IMAGING VIEWPOINT SILHOUETTE GENERATION UNIT    103

112 — IMAGING VIEWPOINT SILHOUETTE GENERATION UNIT

IMAGING VIEWPOINT SILHOUETTE INFORMATION (IMAGING CAMERA ANGLE OF VIEW)

Mesh INFORMATION (VERTEX/FACE)

VIRTUAL/IMAGING VIEWPOINT INTERNAL /EXTERNAL PARAMETER INFORMATION

113 — VIRTUAL VIEWPOINT PROJECTION UNIT

VIRTUAL/IMAGING VIEWPOINT INTERNAL /EXTERNAL PARAMETER INFORMATION

IMAGING VIEWPOINT SILHOUETTE INFORMATION

111 — VIRTUAL VIEWPOINT SILHOUETTE GENERATION UNIT

VIRTUAL VIEWPOINT SILHOUETTE INFORMATION

114 — SILHOUETTE MATCHING DETERMINATION UNIT

SILHOUETTE MATCHING INFORMATION

EP 4 365 848 A1

# FIG. 17

**104** VIEWING GUIDE CONTROL UNIT

Inputs:
- CLOSEST IMAGING VIEWPOINT INFORMATION
- VIRTUAL/IMAGING VIEWPOINT INTERNAL/EXTERNAL PARAMETER INFORMATION
- VIRTUAL VIEWPOINT / IMAGING VIEWPOINT MATCHING INFORMATION
- VIRTUAL VIEWPOINT SILHOUETTE INFORMATION
- IMAGING VIEWPOINT SILHOUETTE INFORMATION
- SILHOUETTE MATCHING INFORMATION
- RENDERED IMAGE

**121** VIEWING GUIDE A GENERATION UNIT

**122** VIEWING GUIDE B GENERATION UNIT

**123** VIEWING GUIDE SUPERIMPOSING UNIT

Internal signals:
- USE GUIDE A IMAGE
- VIRTUAL VIEWPOINT / IMAGING VIEWPOINT MATCHING INFORMATION
- VIEWING GUIDE B IMAGE
- SILHOUETTE MATCHING INFORMATION
- RENDERED IMAGE

Output: FINAL OUTPUT IMAGE

FIG. 18

EP 4 365 848 A1

# FIG. 19

DISPLAY PATTERN 2

# FIG. 20

EP 4 365 848 A1

## INTERNATIONAL SEARCH REPORT

| International application No. |
| --- |
| **PCT/JP2022/007086** |

**A. CLASSIFICATION OF SUBJECT MATTER**

***G06T 15/04***(2011.01)i; ***G06T 15/20***(2011.01)i; ***G06T 19/00***(2011.01)i
FI:　G06T19/00 600; G06T15/04; G06T15/20 500

According to International Patent Classification (IPC) or to both national classification and IPC

**B. FIELDS SEARCHED**

Minimum documentation searched (classification system followed by classification symbols)

　　G06T15/04; G06T15/20; G06T19/00, H04N5/232

Documentation searched other than minimum documentation to the extent that such documents are included in the fields searched

　　Published examined utility model applications of Japan 1922-1996
　　Published unexamined utility model applications of Japan 1971-2022
　　Registered utility model specifications of Japan 1996-2022
　　Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2001-291116 A (SONY CORP) 19 October 2001 (2001-10-19)<br>paragraphs [0001]-[0051] | 1-15 |
| A | JP 2010-20487 A (NIPPON HOSO KYOKAI <NHK>) 28 January 2010 (2010-01-28)<br>paragraphs [0001]-[0095] | 1-15 |
| P, X | JP 2022-16929 A (CANON KK) 25 January 2022 (2022-01-25)<br>paragraphs [0010]-[0060] | 1-2, 8, 12-15 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 April 2022** | **10 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/007086**

| Patent document cited in search report | | | Publication date (day/month/year) | Patent family member(s) | Publication date (day/month/year) |
|---|---|---|---|---|---|
| JP | 2001-291116 | A | 19 October 2001 | (Family: none) | |
| JP | 2010-20487 | A | 28 January 2010 | (Family: none) | |
| JP | 2022-16929 | A | 25 January 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018150933 A